# EUROPÄISCHE PATENTSCHRIFT

(11) **EP 1 246 066 B1**
(45) Veröffentlichungstag und Bekanntmachung des Hinweises auf die Patenterteilung: **25.04.2007**
(21) Anmeldenummer: 02004825.2
(22) Anmeldetag: 02.03.2002
(51) Int. Cl.: G06F 11/16

(54) **Verfahren zum Betrieb eines von einem Prozessor gesteuerten Systems**
Method of operating a processor-controlled system
Procédé d'opération d'un système commandé par processeur

(30) Priorität: 20.03.2001 DE 10113319
(43) Veröffentlichungstag der Anmeldung: 02.10.2002
(73) Patentinhaber: Conti Temic microelectronic GmbH, 90411 Nürnberg (DE)
(72) Erfinder: Dreves, Rainer, 90427 Nürnberg (DE)

(56) Entgegenhaltungen:
- EP-A- 0 636 984
- DE-A1- 3 312 873
- DE-A1- 3 811 736
- US-A- 5 748 638

## Beschreibung

Die Erfindung betrifft ein Verfahren zum Betrieb eines von einem Prozessor gesteuerten Systems nach dem Oberbegriff des Patentanspruchs 1.
Prozessorgesteuerte Systeme, bsp. durch Mikroprozessoren oder Mikrocontroller gesteuerte Systeme, werden für vielfältige Anwendungen eingesetzt, insbesondere zur Ausführung vorgegebener Funktionen oder Abläufe. Die hierfür benötigten Daten werden in den Speicherzellen einer Speichereinheit des Systems gespeichert, oftmals in einer nicht-flüchtigen Speichereinheit, bsp. in einem EEPROM. Im Betrieb des prozessorgesteuerten Systems können bei defekten Speicherzellen oder einer defekten Speichereinheit die gespeicherten Daten nicht oder nur fehlerhaft gelesen werden, so daß vom Prozessor falsche Daten verwendet werden; hierdurch kann ein Anwendungsfehler auftreten, bsp. wird ein falscher Ablauf oder eine nicht beabsichtigte Funktion ausgeführt. Dieses Fehlverhalten ist unerwünscht und störend und muß insbesondere bei prozessorgesteuerten Systemen zur Ausführung sicherheitskritischer Anwendungen (bei Kraftfahrzeugen bsp. den Tempomat, den Airbag oder die Lenkwinkelerkennung betreffende Anwendungen) ausgeschlossen werden.
Es sind unterschiedliche Verfahren gebräuchlich, um defekte Speicherzellen der Speichereinheit und damit falsche Daten zu erkennen, insbesondere die Bildung einer Prüfsumme anhand der gelesenen Daten, wie aus der DE 38 11 736 A1 bekannt. Jedoch können hiermit einerseits Fehler der gesamten Speichereinheit (bsp. ist die Speichereinheit physikalisch zerstört oder nicht vorhanden oder die Speichereinheit wird nicht angesteuert) nicht erkannt werden, andererseits kann, falls alle Speicherzellen konstante Werte aufweisen (bsp. sind alle Bits der Speicherzellen 0 oder 1), nicht zwischen fehlerhaften und korrekten Daten unterschieden werden. Zudem ist im Fehlerfall ein weiterer Betrieb des prozessorgesteuerten Systems nicht möglich.

Der Erfindung liegt die Aufgabe zugrunde, ein Verfahren zum Betrieb eines von einem Prozessor gesteuerten Systems gemäß dem Oberbegriff des Patentanspruchs 1 anzugeben, bei dem der korrekte Betrieb des Systems auf einfache und kostengünstige Weise überwacht und gewährleistet werden kann.
Diese Aufgabe wird erfindungsgemäß durch die Merkmale im Kennzeichen des Patentanspruchs 1 gelöst.
Vorteilhafte Ausgestaltungen des Verfahrens sind Bestandteil der weiteren Patentansprüche.

Die in der Speichereinheit des von einem Prozessor gesteuerten Systems (bsp. in einem EEPROM) nicht-flüchtig gespeicherten Daten bestehen aus einer Vielzahl, eine bestimmte Anzahl von Bits aufweisenden Datenwörtern. Jedes dieser Datenwörter wird in der Speichereinheit mehrfach (redundant) abgespeichert (mindestens dreifach abgespeichert), wobei in einem mehrere Speicherzellen umfassenden Speicherbereich der Speichereinheit jeweils unterschiedliche aus einem der Datenwörter generierte Datenwerte abgespeichert werden; insbesondere wird ein Datenwort in einem mindestens drei verschiedene Speicherzellen aufweisenden Speicherbereich der Speichereinheit mindestens dreimal mit jeweils unterschiedlichen aus dem Datenwort generierten Datenwerten abgespeichert. Die Datenwörter können hierbei durch Anwendung (einfacher) algebraischer Operationen auf das Datenwort generiert werden, wobei für die Generierung der unterschiedlichen Datenwerte eines Speicherbereichs die gleiche algebraische Operation mit jeweils unterschiedlichen funktionalen Zusammenhängen oder eine jeweils unterschiedliche algebraische Operation auf das Datenwort angewendet werden kann. Als algebraische Operationen werden insbesondere arithmetische Operationen und/oder logische Operationen herangezogen, wobei die algebraischen Operationen so gewählt werden, daß sich die hierdurch generierten Datenwerte voneinander unterscheiden, so daß gewährleistet ist, daß alle Datenwerte eines Speicherbereichs unterschiedlich sind. Als algebraische Operationen werden insbesondere Operationen aus dem Befehlssatz der zentralen Prozessoreinheit (CPU) des Prozessors herangezogen, bsp. typische CPU-Operationen wie Additionen (Subtraktionen), Schiebeoperationen oder Bitmanipulationen; bsp. werden die einem Speicherbereich zugeordneten Datenwerte durch Differenzbildung (Subtraktion) zwischen dem Datenwort und mehreren unterschiedlichen Zahlenwerten generiert (d.h. durch Subtraktion des Datenworts von unterschiedlichen vorgegebenen Zahlenwerten) oder durch bitweise Invertierung unterschiedlicher Bits bzw. Bitfolgen des Datenworts, insbesondere durch Invertierung von Halbbytes ("Nibbles") des Datenworts. Vorzugsweise wird in einem Speicherbereich das Datenwort einmal unverändert abgespeichert, d.h. eine Speicherzelle des Speicherbereichs enthält als ersten Datenwert das unveränderte Datenwort, und ansonsten durch Anwendung (einfacher) algebraischer Operationen auf das Datenwort mit unterschiedlichen Datenwerten verändert abgespeichert, d.h. die anderen Speicherzellen des Speicherbereichs (mindestens zwei Speicherzellen des Speicherbereichs) enthalten als weitere Datenwerte gegenüber dem ersten Datenwert auf bestimmte Weise veränderte Datenwerte
Beim Schreiben der Daten werden die aus dem Datenwort generierten unterschiedlichen Datenwerte in den Speicherzellen eines Speicherbereichs der nicht-flüchtigen Speichereinheit abgespeichert. Beim Lesen der Daten und damit des Inhalts der Speicherzellen (insbesondere beim Lesen der in einem Speicherbereich enthaltenen redundanten Information), werden für jeden Speicherbereich die gelesenen Datenwerte überprüft und/oder die aus den gelesenen Datenwerten zurückgewonnenen Datenwörter (d.h. die ursprünglichen im Speicherbereich enthaltenen Daten); diese zurückgewonnenen Datenwörter werden durch Anwendung der jeweils inversen zum Speichern verwendeten algebraischen Operation auf die Datenwerte generiert (insbesondere wird beim unveränderten Abspeichern des Datenworts als ersten Datenwert dieser erste Datenwert unverändert übernommen, während die weiteren Datenwerte jeweils mit der inversen zum Speichern verwendeten algebraischen Operation beaufschlagt werden). Bei der Überprüfung der gelesenen Datenwerte und der aus den gelesenen Datenwerten zurückgewonnenen Datenwörter können zunächst die gelesenen Datenwerte miteinander verglichen werden und alternativ oder zusätzlich hierzu anschließend die anhand der gelesenen Datenwerte zurückgewonnenen Datenwörter: durch den Vergleich der gelesenen Datenwerte kann ein Fehler (bsp. ein Ausfall) der gesamten Speichereinheit erkannt werden - in diesem Falle besitzen alle gelesenen Datenwerte eines Speicherbereichs (bsp. sowohl das unveränderte Datenwort als erster Datenwert als auch die veränderten Datenwörter als weitere Datenwerte) den gleichen Wert (bsp. den Wert 0); durch den Vergleich der anhand der gelesenen Datenwerte zurückgewonnenen Datenwörter kann ein Fehler (bsp. ein Ausfall) einzelner Speicherzellen des betreffenden Speicherbereichs erkannt werden und insbesondere auch eine Fehlerkorrektur vorgenommen werden, indem mittels einer Plausibilitätsbetrachtung auf die richtigen Daten (das korrekte Datenwort) des Speicherbereichs geschlossen wird. Aufgrund der Redundanz beim Speichern der Daten müssen die anhand der gelesenen Datenwerte generierten zurückgewonnenen, einem Speicherbereich zugeordneten Datenwörter bei fehlerfreien Speicherzellen eines Speicherbereichs identisch sein, während sie sich bei fehlerhaften Speicherzellen eines Speicherbereichs voneinander unterscheiden; ist ein Fehler in einem Speicherbereich der Speichereinheit erkannt, kann diesem Speicherbereich das richtige Datenwort durch Mehrheitsentscheidung zugeordnet werden, indem das am häufigsten vorkommende zurückgewonnene Datenwort des Speicherbereichs als (wahrscheinlichstes) Datenwort dem Speicherbereich zugeordnet und für den weiteren Betrieb des prozessorgesteuerten Systems verwendet wird (bsp. wird bei drei auf unterschiedliche Weise in einem Speicherbereich generierten Datenwerten dasjenige aus den Datenwerten zurückgewonnene Datenwort für den weiteren Betrieb des prozessorgesteuerten Systems verwendet, das mindestens zweimal vorhanden ist). Somit ist ein Betrieb des prozessorgesteuerten Systems bei einem Fehler in einzelnen Speicherzellen der Speichereinheit aufgrund der Fehlerkorrektur uneingeschränkt möglich (das prozessorgesteuerte System wird bei einem Fehler nicht außer Funktion gesetzt), während bei einem Fehler der gesamten Speichereinheit den Datenwörtern bestimmte Standardwerte ("Defaultwerte") zugeordnet werden können, mit denen ein weiterer (eingeschränkter) Betrieb des prozessorgesteuerten Systems möglich ist (das prozessorgesteuerte System wird hierdurch nicht komplett außer Funktion gesetzt). Insbesondere kann auch bei der ersten Inbetriebnahme des prozessorgesteuerten Systems (bei der Initialisierung) eine gelöschte nicht-flüchtige Speichereinheit erkannt werden, so daß in diesem Falle bestimmte Standardwerte (Defaultwerte) für die Datenwörter verwendet werden können, mit denen eine Initialisierung des prozessorgesteuerten Systems durchgeführt werden kann (eine manuelle Inbetriebnahme des prozessorgesteuerten Systems ist somit nicht erforderlich).

Vorteilhafterweise können mit dem vorgestellten Verfahren Datenfehler in der Speichereinheit eines prozessorgesteuerten Systems zuverlässig auf einfache und kostengünstige Weise erkannt werden (insbesondere kann ein Fehlerfall eindeutig von einem Nicht-Fehlerfall unterschieden werden), so daß sich Fehlfunktionen des prozessorgesteuerten Systems aufgrund von Fehlern der Speicherzellen der Speichereinheit (insbesondere bei defekten, gelöschten, nicht vorhandenen oder nicht ansteuerbaren Speicherzellen) oder aufgrund von Fehlern der gesamten Speichereinheit (insbesondere bei defekten, gelöschten, nicht vorhandenen oder nicht ansteuerbaren Speichereinheiten) vermeiden lassen und die korrekte Ausführung der Funktionalität des prozessorgesteuerten Systems (insbesondere bei sicherheitskritischen prozessorgesteuerten Systemen) gewährleistet ist. Da im Fehlerfall beim Erkennen einer defekten Speicherzelle aufgrund der Fehlerkorrektur dennoch das wahrscheinlich korrekte Datenwort ermittelt und verwendet werden kann und beim Erkennen einer defekten Speichereinheit den Datenwörtern sinnvolle Standardwerte zugeordnet werden, ist ein Betrieb des prozessorgesteuerten Systems auch im Fehlerfall möglich, so daß ein uneingeschränkter Betrieb des prozessorgesteuerten Systems mit einer hohen Verfügbarkeit gewährleistet wird.

Im Zusammenhang mit der Zeichnung soll das Verfahren anhand eines Ausführungsbeispiels weiter erläutert werden.
Hierbei zeigt:
- Figur 1: mehrere aus einem ersten Datenwort generierte Datenwerte eines Speicherbereichs,
- Figur 2: mehrere aus einem zweiten Datenwort generierte Datenwerte eines Speicherbereichs.

Das prozessorgesteuerte System ist bsp. ein von einem Mikrocontroller gesteuertes Steuergerät eines Kraftfahrzeugs, insbesondere ein Steuergerät zur Ausführung sicherheitskritischer Bedienfunktionen bei einem Kraftfahrzeug. Vom Mikrocontroller werden bsp. Steuerdaten eingelesen; abhängig von diesen Steuerdaten werden die Funktionen des Steuergeräts realisiert. Der Mikrocontroller weist als Funktionseinheiten bsp. eine zentrale Prozessoreinheit (CPU), eine bsp. als EEPROM ausgebildete nicht-flüchtige Speichereinheit mit einer Vielzahl von Speicherzellen (bsp. 8 kBit bzw. 1 kByte) und eine Recheneinheit auf.

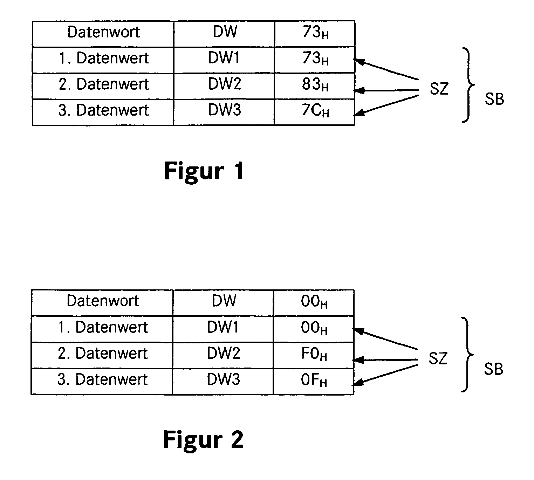

Als Steuerdaten zur Realisierung der Funktionen des Steuergeräts können bsp. bis zu 333 Datenwörter DW vorgesehen werden. Bsp. umfassen die in der nicht-flüchtigen Speichereinheit zu speichernden Datenwörter DW jeweils 8 Bit; jedes Datenwort DW (bsp. besitzt eines der Datenwörter DW in hexadezimaler Schreibweise gemäß der Figur 1 den Wert 73_{H} und gemäß der Figur 2 den Wert 00_{H}) wird hierbei in einem Speicherbereich SB der Speichereinheit mehrfach abgespeichert; bsp. wird ein Speicherbereich SB aus drei Speicherzellen SZ gebildet, so daß das Datenwort DW in diesen drei Speicherzellen SZ dreifach abgespeichert wird (Datenwerte DW1, DW2, DW3). Das Datenwort DW wird hierbei in den Speicherzellen SZ eines Speicherbereichs SB jeweils mit einem unterschiedlichen Datenwert DW1, DW2, DW3 abgespeichert, d.h. in den drei Speicherzellen SZ des Speicherbereichs SB mit drei verschiedenen, aus dem ursprünglichen Datenwort DW generierten Datenwerten DW1, DW2, DW3; insbesondere wird in einer der Speicherzellen SZ des Speicherbereichs SB als erster Datenwert DW1 das ursprüngliche Datenwort DW abgespeichert, während in den weiteren Speicherzellen SZ des Speicherbereichs SB als weitere Datenwerte DW2, DW3 gegenüber dem ursprünglichen Datenwort DW veränderte, sich voneinander unterscheidende Werte abgespeichert werden (bei den drei Speicherzellen SZ umfassenden Speicherbereich SB wird somit in der ersten Speicherzelle SZ der erste Datenwert DW1, in der zweiten Speicherzelle SZ der zweite Datenwert DW2 und in der dritten Speicherzelle SZ der dritte Datenwert DW3 abgespeichert). Die beiden weiteren Datenwerte DW2, DW3 werden aus dem ursprünglichen Datenwort DW durch Anwendung einer algebraischen Operation generiert; bsp. wird als algebraische Operation die Invertierung einer bestimmten Anzahl von Bits des Datenworts DW herangezogen: insbesondere wird zur Generierung des zweiten Datenwerts DW2 eine Invertierung des ersten Halbbytes ("Nibbles") des Datenworts DW vorgenommen (durch die logische Operation Datenwert DW2 = Datenwort DW ^ F0_{H)} und zur Generierung des dritten Datenwerts DW3 eine Invertierung des zweiten Halbbytes ("Nibbles") des ursprünglichen Datenworts DW (durch die logische Operation Datenwert DW3 = Datenwort DW ^ 0F_{H}). Hierdurch ist gewährleistet, daß sich die drei einem Speicherbereich SB zugeordneten Datenwerte DW1, DW2, DW3 voneinander unterscheiden, d.h. daß die drei Datenwerte DW1, DW2, DW3 unterschiedliche Werte annehmen. Die drei einem Speicherbereich SB zugeordneten Datenwerte DW1, DW2, DW3 werden in unterschiedliche Speicherzellen SZ des Speicherbereichs SB der Speichereinheit abgelegt (in einer Speicherzelle SZ können alle 8 Bit eines Bytes und damit zwei aus jeweils 4 Bit bestehende Halbbytes der Datenwerte DW1, DW2, DW3 gespeichert werden); hierbei wird in der ersten Speicherzelle SZ als erster Datenwert DW1 das ursprüngliche Datenwort DW gespeichert (gemäß Figur 1 bsp. der Datenwert 73_{H}, gemäß Figur 2 bsp. der Datenwert 00_{H}), in der zweiten Speicherzelle SZ wird der nach Durchführung der oben beschriebenen logischen Operation aus dem ursprünglichen Datenwort DW generierte zweite Datenwert DW2 gespeichert (gemäß Figur 1 der Datenwert 83_{H}, gemäß Figur 2 der Datenwert F0_{H)} und in der dritten Speicherzelle SZ wird der nach Durchführung der oben beschriebenen logischen Operation aus dem ursprünglichen Datenwort DW generierte dritte Datenwert DW3 gespeichert (gemäß Figur 1 der Datenwert 7C_{H}, gemäß Figur 2 der Datenwert 0F_{H}).

Beim Lesen der Daten werden bsp. sowohl die Speichereinheit als auch die Speicherinhalte der Speicherzellen SZ eines Speicherbereichs SB überprüft. Hierbei wird zunächst die Funktionsfähigkeit der Speichereinheit überprüft, indem bei dem drei Speicherzellen SZ umfassenden Speicherbereich SB die drei gelesenen Datenwerte DW1, DW2, DW3 miteinander verglichen werden): bei einem Fehler der Speichereinheit (bsp. aufgrund eines Ausfalls der gesamten Speichereinheit) kann aus den Speicherzellen SZ der Speichereinheit keine Information abgerufen werden, so daß beim Lesen die Speicherinhalte aller Speicherzellen SZ der Speichereinheit den gleichen Wert ergeben, bsp. 00_{H} oder FF_{H} (daher sind auch alle gelesenen Datenwerte DW1, DW2, DW3 eines Speicherbereichs SB gleich, bsp. besitzen alle Datenwerte DW1, DW2, DW3 eines Speicherbereichs SB den gleichen Wert 00_{H} oder FF_{H}), während sich bei einer funktionsfähigen Speichereinheit die Speicherinhalte aller Speicherzellen SZ eines Speicherbereichs SB voneinander unterscheiden müssen. Hierdurch kann, wie anhand der Figur 2 ersichtlich, ein funktionsfähiger Speicherbereich SB mit dem korrekten Datenwort DW = 00_{H} - hier besitzt nur der Datenwert DW1 den Wert 00_{H} - von einem defekten Speicherbereich SB mit dem fehlerhaften Datenwort DW = 00_{H} - hier besitzen alle Datenwerte DW1, DW2, DW3 den Wert 00_{H} - unterschieden werden. Bei einem erkannten Fehler der Speichereinheit werden den Datenwörtern DW Standardwerte zugeordnet, mit denen die Funktionalität des Steuergeräts eingeschränkt aufrechterhalten werden kann.
Ist die Speichereinheit als funktionsfähig erkannt (die gelesenen Datenwerte DW1, DW2, DW3 und damit die Speicherinhalte der Speicherzellen SZ eines Speicherbereichs SB unterscheiden sich voneinander), werden die Speicherinhalte der Speicherzellen SZ eines Speicherbereichs SB überprüft, indem durch Anwendung der inversen beim Speichern verwendeten logischen Operation aus den Datenwerten DW2, DW3 des Speicherbereichs SB das ursprüngliche Datenwort DW zurückgewonnen wird (gemäß Figur 1 muß sich aus den beiden Datenwerten DW2, DW3 als Datenwort DW wieder der Wert 73_{H} ergeben, gemäß Figur 2 muß sich aus den beiden Datenwerten DW2, DW3 als Datenwort DW wieder der Wert 00_{H} ergeben), das mit dem Datenwert DW1 (und damit mit dem unveränderten ursprünglichen Datenwort DW) verglichen werden: stimmen die einem Speicherbereich SB zugeordneten, aus den drei Datenwerten DW1, DW2, DW3 zurückgewonnenen Datenwörter DW überein, sind Speicherinhalt des Speicherbereichs SB und die entsprechenden Speicherzellen SZ des Speicherbereichs SB der Speichereinheit fehlerfrei (somit auch das zugehörige Datenwort DW); differieren dagegen die einem Speicherbereich SB zugeordneten, aus den drei Datenwerten DW1, DW2, DW3 zurückgewonnenen Datenwörter DW voneinander (d.h. nicht alle drei aus den drei Datenwerten DW1, DW2, DW3 zurückgewonnenen Datenwörter DW sind gleich), ist ein Fehler in einzelnen Speicherzellen SZ des Speicherbereichs SB der Speichereinheit vorhanden (bsp. aufgrund eines Ausfalls oder Defekts einzelner Speicherzellen SZ des Speicherbereichs SB). Bei einem erkannten Fehler in Speicherzellen SZ des Speicherbereichs SB der Speichereinheit wird als Fehlerkorrektur für das dem Speicherbereich SB zugeordnete Datenwort DW als wahrscheinlichster Wert derjenige Wert herangezogen, den die Mehrheit der zurückgewonnenen Datenwörter DW aufweist; d.h. bei den drei aus den drei Datenwerten DW1, DW2, DW3 zurückgewonnenen Datenwörtern DW ist dies derjenige Wert, den zwei der zurückgewonnenen Datenwörter DW aufweisen. Mit dieser Fehlerkorrektur und der Vorgabe plausibler Datenwörter DW kann somit auch bei Fehlern in einzelnen Speicherzellen SZ der Speichereinheit der Betrieb des Steuergeräts, insbesondere die gesamte Funktionalität beim Betrieb des Steuergeräts, uneingeschränkt aufrechterhalten werden.

Die Erkennung der Funktionsfähigkeit der Speichereinheit ist nicht unbedingt erforderlich, da sie automatisch beim anschließenden Vergleich der Datenwerte erkannt wird. Hierbei werden auch Doppelfehler erkannt, da aber dann alle Datenwerte unterschiedlich sind, ist eine Mehrheitsentscheidung in diesem Falle nicht möglich.

## Patentansprüche

1. Verfahren zum Betrieb eines von einem Prozessor gesteuerten Systems, dessen Daten in einer nicht-flüchtigen Speichereinheit gespeichert werden, wobei beim Speichern der Daten aus einer bestimmten Anzahl von Bits bestehende Datenwörter (DW) gebildet werden, ein Datenwort (DW) in einem Speicherbereich (SB) der nicht-flüchtigen Speichereinheit abgespeichert wird, beim Lesen der gespeicherten Daten die Datenwörter (DW) verglichen werden und bei einer Abweichung der Datenwörter (DW) ein Fehler in den gespeicherten Daten erkannt wird, **dadurch gekennzeichnet, dass** beim Speichern der Daten ein Datenwort (DW) mit jeweils sich voneinander unterscheidenden, aus dem Datenwort (DW) generierten Datenwerten (DW1, DW2, DW3) abgespeichert wird,
beim Lesen der gespeicherten Daten die gelesenen Datenwerte (DW1, DW2, DW3) eines Speicherbereichs (SB) verglichen werden, und daß bei identischen gelesenen Datenwerten (DW1, DW2, DW3) eines Speicherbereichs (SB) ein Fehler in der nicht-flüchtigen Speichereinheit erkannt wird und
daß beim Vergleichen der Datenwörter (DW) die aus den gelesenen Datenwerten (DW1, DW2, DW3) zurückgewonnenen Datenwörter (DW) verglichen werden.

2. Verfahren nach Anspruch 1 , **dadurch gekennzeichnet, daß** die Datenwerte (DW1, DW2, DW3) durch algebraische Operationen aus dem Datenwort (DW) generiert werden, und daß die aus den gelesenen Datenwerten (DW1, DW2, DW3) zurückgewonnenen Datenwörter (DW) durch die inversen beim Speichern der Daten verwendeten algebraischen Operationen generiert werden.

3. Verfahren nach Anspruch 2, **dadurch gekennzeichnet, daß** als algebraische Operationen arithmetische Operationen verwendet werden.

4. Verfahren nach Anspruch 3, **dadurch gekennzeichnet, daß** als arithmetische Operationen die Differenzen zwischen dem Datenwort (DW) und unterschiedlichen Zahlenwerten gebildet werden.

5. Verfahren nach Anspruch 2, **dadurch gekennzeichnet, daß** als algebraische Operationen logische Operationen verwendet werden.

6. Verfahren nach Anspruch 5, **dadurch gekennzeichnet, daß** als logische Operationen unterschiedliche Bits des Datenworts (DW) und/oder eine unterschiedliche Anzahl von Bits des Datenworts (DW) invertiert werden.

7. Verfahren nach Anspruch 6, **dadurch gekennzeichnet, daß** unterschiedliche Halbbytes des aus mindestens einem Byte bestehenden Datenworts (DW) invertiert werden.

8. Verfahren nach einem der Ansprüche 2 bis 7 **dadurch gekennzeichnet, daß** ein erster Datenwert (DW1) als unverändertes Datenwort (DW) und weitere Datenwerte (DW2, DW3) durch algebraische Operationen aus dem Datenwort (DW) generiert werden.

9. Verfahren nach einem der Ansprüche 1 bis 8, **dadurch gekennzeichnet, daß** bei einem Fehler der nicht-flüchtigen Speichereinheit für die gelesenen Datenwörter (DW) Standardwerte vorgegeben werden.

10. Verfahren nach Anspruch 9, **dadurch gekennzeichnet, daß** der Betrieb des Systems mit den Standardwerten durchgeführt wird.

11. Verfahren nach Anspruch 9 oder 10, **dadurch gekennzeichnet, daß** eine Initialisierung des Systems mit den Standardwerten durchgeführt wird.

12. Verfahren nach einem der Ansprüche 1 bis 11, **dadurch gekennzeichnet, daß** bei einem Fehler in den gespeicherten Daten das einem Speicherbereich (SB) zugeordnete Datenwort (DW) anhand der zurückgewonnenen Datenwörter (DW) eines Speicherbereichs (SB) vorgegeben wird.

13. Verfahren nach Anspruch 12, **dadurch gekennzeichnet, daß** als dem Speicherbereich (SB) zugeordnete Datenwort (DW) das am häufigsten vorkommende der zurückgewonnenen Datenwörter (DW) eines Speicherbereichs (SB) vorgegeben wird.

14. Verfahren nach einem der Ansprüche 1 bis , 13 **dadurch gekennzeichnet, daß** die aus dem Datenwort (DW) generierten Datenwerte (DW1, DW2, DW3) und die aus den gelesenen Datenwerten (DW1, DW2, DW3) zurückgewonnenen Datenwörter (DW) von der zentralen Recheneinheit des Prozessors berechnet werden.

## Claims

1. A procedure for operating a processor-controlled system, the data of which is stored in a permanent memory unit, whereby while storing the data, data words (DW) are formed which consist of a specific number of bits, a data word (DW) is stored in a memory area (SB) of the permanent memory unit, the data words (DW) are compared while reading the stored data, and an error in the stored data is detected if the data words (DW) differ from each other, **characterized in that** while storing the data, a data word (DW) with data values (DW1, DW2, DW3) which differ from each other and which are generated from the data word (DW) is stored
when the stored data is read, the read data values (DW1, DW2, DW3) of a memory area (SB) are compared, and that if the data values (DW1, DW2, DW3) of a memory area (SB) which are read are identical, an error is detected in the permanent memory unit, and
when the data words (DW) are compared, the data words (DW) which are recovered from the read data values (DW1, DW2, DW3) are compared.

2. A procedure according to claim 1, **characterized in that** the data values (DW1, DW2, DW3) are generated using algebraic operations from the data word (DW), and that the data words (DW) recovered from the read data values (DW1, DW2, DW3) are generated by inversing the algebraic operations using when storing the data.

3. A procedure according to claim 2, **characterized in that** arithmetic operations are used as algebraic operations.

4. A procedure according to claim 3, **characterized in that** as arithmetic operations, the differences between the data word (DW) and different numerical values are calculated.

5. A procedure according to claim 2, **characterized in that** logical operations are used as algebraic operations.

6. A procedure according to claim 5, **characterized in that** as logical operations, different bits from the data word (DW) and/or a different number of bits from the data word (DW) are inverted.

7. A procedure according to claim 6, **characterized in that** different semi-bytes from at the data word (DW) which consists of at least one byte are inverted.

8. A procedure according to any one of claims 2 to 7, **characterized in that** a first data value (DW1) is generated as an unaltered data word (DW) and additional data values (DW2, DW3) are generated from the data word (DW) using algebraic operations.

9. A procedure according to any one of claims 1 to 8, **characterized in that** when an error occurs in the permanent memory unit, standard values are specified for the read data words (DW).

10. A procedure according to claim 9, **characterized in that** the operation of the system is conducted using the standard values.

11. A procedure according to either of claims 9 or 10, **characterized in that** an initialisation of the system is conducted using the standard values.

12. A procedure according to any one of claims 1 to 11, **characterized in that** when an error occurs in the stored data, the data word (DW) which is assigned to a memory area (SB) is specified based on the recovered data words (DW) of a memory area (SB).

13. A procedure according to claim 12, **characterized in that** as the data word (DW) which is assigned to the memory area (SB), that which occurs the most frequently among the recovered data words (DW) of a memory area (SB) is specified.

14. A procedure according to any one of claims 1 to 13, **characterized in that** the data values (DW1, DW2, DW3) generated from the data word (DW) and the data words (DW) recovered from the read data values (DW1, DW2, DW3) are calculated by the central computing unit of the processor.

## Revendications

1. Procédé de fonctionnement d'un système commandé par processeur, dont les données sont enregistrées dans une unité de mémoire non volatile, des mots de données (DW) composés d'un certain nombre de bits étant formés lors de l'enregistrement des données, un mot de données (DW) étant enregistré dans une zone de mémoire (SB) de l'unité de mémoire non volatile, les mots de données (DW) étant comparés lors de la lecture des données enregistrées, et une erreur étant détectée dans les données enregistrées en cas de divergence des mots de données (DW), **caractérisé en ce que**, lors de l'enregistrement des données, un mot de données (DW), ayant respectivement des valeurs de données (DW1, DW2, DW3) générées à partir du mot de données (DW) et différant respectivement les unes des autres, est enregistré,
les valeurs de données lues (DW1, DW2, DW3) d'une zone de mémoire (SB) sont comparées lors de la lecture des données enregistrées, et **en ce que**, dans le cas de valeurs de données lues (DW1, DW2, DW3) identiques d'une zone de mémoire (SB), une erreur est détectée dans l'unité de mémoire non volatile et
**en ce que**, lors de la comparaison des mots de données (DW), les mots de données (DW) récupérés à partir des valeurs de données lues (DW1, DW2, DW3) sont comparées.

2. Procédé selon la revendication 1, **caractérisé en ce que** les valeurs de données (DW1, DW2, DW3) sont générées par des opérations algébriques à partir du mot de données (DW), et **en ce que** les mots de données (DW) récupérés à partir des valeurs de données lues (DW1, DW2, DW3) sont générés par les opérations algébriques inverses appliquées lors de l'enregistrement des données.

3. Procédé selon la revendication 2, **caractérisé en ce que** des opérations arithmétiques sont utilisées en tant qu'opérations algébriques.

4. Procédé selon la revendication 3, **caractérisé en ce que** les différences entre le mot de données (DW) et différentes valeurs numériques sont formées en tant qu'opérations arithmétiques.

5. Procédé selon la revendication 2, **caractérisé en ce que** des opérations logiques sont utilisées en tant qu'opérations algébriques.

6. Procédé selon la revendication 5, **caractérisé en ce que**, en tant qu'opérations logiques, différents bits du mot de données (DW) et/ou un nombre différent de bit du mot de données (DW) sont inversés.

7. Procédé selon la revendication 6, **caractérisé en ce que** différents demi-octets du mot de données (DW) composé d'au moins un octet sont inversés.

8. Procédé selon une des revendications 2 à 7, **caractérisé en ce qu'**une première valeur de données (DW1) est générée en tant que mot de données (DW) inchangé, et d'autres valeurs de données (DW2, DW3) sont générées par des opérations algébriques à partir du mot de données (DW).

9. Procédé selon une des revendications 1 à 8, **caractérisé en ce que** des valeurs standards sont prédéfinies pour les mots de données lus (DW) en cas d'erreur de l'unité de mémoire non volatile.

10. Procédé selon la revendication 9, **caractérisé en ce que** le fonctionnement du système est exécuté avec les valeurs standards.

11. Procédé selon la revendication 9 ou 10, **caractérisé en ce qu'**une initialisation du système est exécutée avec les valeurs standards.

12. Procédé selon une des revendications 1 à 11, **caractérisé en ce que**, en cas d'erreur dans les données enregistrées, le mot de données (DW) affecté à une zone de mémoire (SB) est prédéfini à l'aide des mots de données (DW) récupérés d'une zone de mémoire (SB).

13. Procédé selon la revendication 12, **caractérisé en ce que**, en tant que mot de données (DW) affecté à la zone de mémoire (SB), le mot de données prédéfini est celui qui apparaît le plus souvent parmi les mots de données (DW) récupérés d'une zone de mémoire (SB).

14. Procédé selon une des revendications 1 à 13, **caractérisé en ce que** les valeurs de données (DW1, DW2, DW3) générées à partir du mot de données (DW) et les mots de données (DW) récupérés à partir des valeurs de données lues (DW1, DW2, DW3) sont calculés par l'unité de calcul centrale du processeur.
